(19)

Europäisches
Patentamt
European
Patent Office
Office européen
des brevets

(11) **EP 4 593 338 A1**

(12) **EUROPEAN PATENT APPLICATION**
published in accordance with Art. 153(4) EPC

(43) Date of publication:
**30.07.2025 Bulletin 2025/31**

(21) Application number: **22963713.7**

(22) Date of filing: **31.10.2022**

(51) International Patent Classification (IPC):
**H04L 27/00** *(2006.01)*

(52) Cooperative Patent Classification (CPC):
**H04L 27/00**

(86) International application number:
**PCT/CN2022/128562**

(87) International publication number:
**WO 2024/092390 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **WANG, Wenhui**
  **Shenzhen, Guangdong 518129 (CN)**
- **WU, Jianjun**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS**

(57) This application relates to the field of communication technologies, and discloses a communication method and apparatus, to improve security of underlying signaling transmitted between a network device and a terminal device, and enhance security strength of anti-eavesdropping and anti-tampering of the underlying signaling. The method includes: a terminal device generates, by using a random number generator, at least one random number based on a user-specific parameter of a physical channel from a network device and a specified historical message exchanged between the terminal device and the network device. The at least one random number includes a first random number. The terminal device generates a physical channel encryption key based on the first random number by using a key generator. The terminal device encrypts or decrypts the physical channel based on the physical channel encryption key.

FIG. 5

**Description**

<u>TECHNICAL FIELD</u>

Embodiments of this application relate to the field of communication technologies, and in particular, to a communication method and apparatus.

<u>BACKGROUND</u>

Similar to a 4th generation (4th generation, 4G) mobile communication system, a 5th generation (5th generation, 5G) mobile communication system is characterized by two layers of security, and security mode command activation and security protection are respectively performed on a non-access stratum (non-access stratum, NAS) and an access stratum (access stratum, AS). After authenticating each other, a terminal device and a network agree on a security algorithm and key used for encryption and integrity protection of NAS signaling, radio resource control (radio resource control, RRC) signaling, and user data in a subsequent communication process. After agreement on a NAS security algorithm is completed, encryption and integrity protection are performed on all NAS signaling between an access and mobility management function (access and mobility management function, AMF) network element on a network side and the terminal device based on the agreed security algorithm and key used for encryption and integrity protection. In an AS security mode command exchange process, a network device on the network side and the terminal device agree on a security algorithm and key for AS encryption and integrity protection, and start encryption and integrity protection of RRC signaling and user data of the AS.

However, the foregoing security protection solution provides only security protection for NAS signaling and RRC signaling. For the 4G mobile communication system and the 5G mobile communication system, a packet data convergence protocol (packet data convergence protocol, PDCP) layer at the AS stratum provides a signaling transmission service for an RRC layer, implements encryption and integrity protection for RRC signaling, and implements decryption and integrity check for the RRC signaling in a reverse direction. However, no security protection is provided for signaling at each protocol sublayer below the PDCP layer. For example, no security protection is provided for physical (physical, PHY) layer signaling and medium access control (medium access control, MAC) layer signaling such as a media access control layer control instruction (media access control layer control element, MAC CE), uplink control information (uplink control information, UCI), and downlink control information (downlink control information, DCI). An attacker may eavesdrop and tamper with these pieces of underlying signaling, which may cause problems such as service interruption of an authorized terminal device, service performance deterioration of the terminal device, abnormal power consumption of the terminal device, and abnormal resource scheduling of the network device.

<u>SUMMARY</u>

This application provides a communication method and apparatus, to improve security of underlying signaling transmitted between a network device and a terminal device, and enhance security strength of anti-eavesdropping and anti-tampering of the underlying signaling.

According to a first aspect, an embodiment of this application provides a communication method. The method may be performed by a terminal device, may be performed by a component (for example, a processor, a chip, or a chip system) of the terminal device, or may be implemented by a logical module or software that can implement all or some functions of the terminal device. The following provides descriptions by using an example in which the method is performed by the terminal device. The method includes: the terminal device generates, by using a random number generator, at least one random number based on a user-specific parameter of a physical channel from a network device and a specified historical message exchanged between the terminal device and the network device. The at least one random number includes a first random number. The terminal device generates a physical channel encryption key based on the first random number by using a key generator. The terminal device encrypts or decrypts the physical channel based on the physical channel encryption key.

Optionally, the physical channel may be a physical downlink control channel (physical downlink control channel, PDCCH), a physical downlink shared channel (physical downlink shared channel, PDSCH), a physical uplink control channel (physical uplink control channel, PUCCH), a physical uplink shared channel (physical uplink shared channel, PUSCH), or the like.

According to the foregoing method, the terminal device may extract the random number based on the user-specific parameter of the physical channel from the network device and the historical message exchanged with the network device, to generate the physical channel encryption key (for example, extract the random number based on a specific periodicity, to generate the physical channel encryption key), and encrypt or decrypt the physical channel, to provide protection for underlying signaling (for example, physical layer signaling) transmitted between the network device and the terminal device, improve security of the underlying signaling transmitted between the network device and the terminal device, and enhance security strength of anti-eavesdropping and anti-tampering of the underlying signaling. **In** addition, the random number is generated based on the exchanged historical message, to increase difficulty in cracking by an attacker, and prevent message spoofing and identity spoofing of the network device.

**In** a possible design, the at least one random number further includes a second random number, and the method further includes: The terminal device updates, based on the second random number, a physical channel scrambling sequence corresponding to the physical channel; and the terminal device scrambles or descrambles the physical channel based on an updated physical channel scrambling sequence.

**In** the foregoing design, the physical channel scrambling sequence may be updated (for example, updated based on a specific periodicity) based on the generated random number, to increase difficulty in correct descrambling by the attacker, thereby increasing costs such as calculation and time consumption of eavesdropping on signaling exchanged between the terminal device and the network device by the attacker.

In a possible design, the at least one random number further includes a third random number, and the method further includes: The terminal device updates, based on the third random number, a physical channel pilot sequence corresponding to the physical channel; and the terminal device performs resource mapping or channel estimation on the physical channel based on an updated physical channel pilot sequence.

In the foregoing design, the physical channel pilot sequence may be updated (for example, updated based on a specific periodicity) based on the generated random number, to increase difficulty in correct channel estimation by the attacker, thereby increasing costs such as calculation and time consumption of eavesdropping on signaling exchanged between the terminal device and the network device by the attacker.

In a possible design, the method further includes: The terminal device receives a scrambling-specific parameter of the physical channel from the network device. A quantity of bits included in the scrambling-specific parameter is greater than a first quantity threshold. The terminal device generates, based on a first sub-scrambling parameter, the physical channel scrambling sequence corresponding to the physical channel. The first sub-scrambling parameter is determined by the terminal device based on a first selection rule and the scrambling-specific parameter, and a quantity of bits included in the first sub-scrambling parameter is equal to the first quantity threshold. The terminal device generates, based on a second sub-scrambling parameter, the physical channel pilot sequence corresponding to the physical channel. The second sub-scrambling parameter is determined by the terminal device based on a second selection rule and the scrambling-specific parameter, and a quantity of bits included in the second sub-scrambling parameter is equal to the first quantity threshold.

In the foregoing design, a length of the scrambling-specific parameter is increased, and the first sub-scrambling parameter and the second sub-scrambling parameter are extracted based on a preset rule, to update the physical channel scrambling sequence and the physical channel pilot sequence, thereby increasing random space of the scrambling-specific parameter and increasing difficulty in cracking by the attacker.

In a possible design, that the terminal device generates, by using a random number generator, at least one random number based on a user-specific parameter of a physical channel from a network device and a specified historical message exchanged between the terminal device and the network device includes: The terminal device obtains, based on a specified periodicity, a specified historical message most recently exchanged with the network device; and the terminal device generates the at least one random number based on the user-specific parameter and the most recently exchanged specified historical message by using the random number generator.

In the foregoing design, the terminal device may periodically obtain the user-specific parameter and a latest historical message, and generate the random number, to generate or update the physical channel encryption key, and the like. This can further increase difficulty in cracking the physical channel encryption key, and the like by the attacker, and improve security of signaling transmission between the network device and the terminal device.

In a possible design, the user-specific parameter of the physical channel is randomly configured by the network device.

In the foregoing design, the network device randomly configures the user-specific parameter of the physical channel, to further increase difficulty in cracking the user-specific parameter by the attacker, prevent the physical channel encryption key, and the like used by the network device and the terminal device from being cracked, and further improve security of signaling transmission between the network device and the terminal device.

According to a second aspect, an embodiment of this application provides a communication method. The method may be performed by a network device, or may be performed by a component (for example, a processor, a chip, or a chip system) of the network device, or may be implemented by a logical module or software that can implement all or some functions of the network device. The following provides descriptions by using an example in which the method is performed by the network device. The method includes: the network device generates, by using a random number generator, at least one random number based on a user-specific parameter that is of a physical channel and that is sent to a terminal device and a specified historical message exchanged between the terminal device and the network device. The at least one random number includes a first random number. The network device generates a physical channel encryption key based on the first random number by using a key generator. The network device decrypts or encrypts the physical channel based on the physical channel encryption key.

Optionally, the physical channel may be a PDCCH, a PDSCH, a PUCCH, a PUSCH, or the like.

In a possible design, the at least one random number further includes a second random number, and the method further includes: The network device updates, based on the second random number, a physical channel scrambling sequence corresponding to the physical channel; and the network device descrambles or scrambles the physical channel based on an updated physical channel scrambling sequence.

In a possible design, the at least one random number further includes a third random number, and the method further includes: The network device updates, based on the third random number, a physical channel pilot sequence corresponding to the physical channel; and the network device performs channel estimation or resource mapping on the physical channel based on an updated physical channel pilot sequence.

In a possible design, the method further includes: The network device sends a scrambling-specific parameter of the physical channel to the terminal device. A quantity of bits included in the scrambling-specific parameter is greater than a first quantity threshold. The network device generates, based on a first sub-scrambling parameter, the physical channel scrambling sequence corresponding to the physical channel. The first sub-scrambling parameter is determined by the network device based on a first selection rule and the scrambling-specific parameter, and a quantity of bits included in the first sub-scrambling parameter is equal to the first quantity threshold. The network device generates, based on a second sub-scrambling parameter, the physical channel pilot sequence corresponding to the physical channel. The second sub-scrambling parameter is determined by the network device based on a second selection rule and the scrambling-specific parameter, and a quantity of bits included in the second sub-scrambling parameter is equal to the first quantity threshold.

In a possible design, that the network device generates, by using a random number generator, at least one random number based on a user-specific parameter that is of a physical channel and that is sent to a terminal device and a specified historical message exchanged between the terminal device and the network device includes: The network device obtains, based on a specified periodicity, a specified historical message most recently exchanged with the terminal device; and the network device generates the at least one random number based on the user-specific parameter and the most recently exchanged specified historical message by using the random number generator.

In a possible design, the user-specific parameter of the physical channel is randomly configured by the network device.

According to a third aspect, an embodiment of this application provides a communication apparatus. The apparatus has a function of implementing the method in the first aspect. The function may be implemented by using hardware, or may be implemented by using hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a processor. The processor may be coupled to a memory. The memory is configured to store instructions executed by the processor. When the instructions are executed by the processor, the apparatus may perform the method in the first aspect. "Coupling" means that two components are directly or indirectly connected or have a communication relationship.

In a possible design, the apparatus may be an entire terminal device.

According to a fourth aspect, an embodiment of this application provides a communication apparatus. The apparatus has a function of implementing the method in the second aspect. The function may be implemented by using hardware, or may be implemented by using hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a processor. The processor may be coupled to a memory. The memory is configured to store instructions executed by the processor. When the instructions are executed by the processor, the apparatus may perform the method in the second aspect. "Coupling" means that two components are directly or indirectly connected or have a communication relationship.

In a possible design, the apparatus may be an entire network device.

According to a fifth aspect, an embodiment of this application provides a communication apparatus. The communication apparatus includes an interface circuit and a processor, and the processor and the interface circuit are coupled to each other. The processor is configured to implement the method in the first aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, or an input/output interface.

Optionally, the communication apparatus may further include a memory, configured to store instructions executed by the processor, or store input data required for running instructions by the processor, or store data generated after the processor runs instructions. The memory may be a physically independent unit, or may be coupled to the processor, or the processor includes the memory.

According to a sixth aspect, an embodiment of this application provides a communication apparatus. The communication apparatus includes an interface circuit and a processor, and the processor and the interface circuit are coupled to each other. The processor is configured to implement the method in the second aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a seventh aspect, an embodiment of this application provides a communication system. The communication system includes a terminal device and a network device. The terminal device may implement the method in the first aspect, and the network device may implement the method in the second aspect.

According to an eighth aspect, an embodiment of this application provides a computer-readable storage medium. The computer-readable storage medium stores a computer program or instructions. When the computer program or the instructions are executed by a processor, the method in the first aspect or the second aspect can be implemented.

According to a ninth aspect, an embodiment of this application further provides a computer program product, including a computer program or instructions. When the computer program or the instructions are executed by a processor, the method in the first aspect or the second aspect can be implemented.

According to a tenth aspect, an embodiment of this application further provides a chip system. The chip system includes a processor. The processor is configured to be coupled to a memory. The memory is configured to store a program or instructions. When the program or the instructions are executed by the processor, the method in the first aspect or the second aspect can be implemented.

For technical effects that can be achieved in the second aspect to the tenth aspect, refer to technical effects that can be achieved in the first aspect. Details are not described herein again.

## BRIEF DESCRIPTION OF DRAWINGS

FIG. 1 is a diagram of an architecture of a communication system according to an embodiment of this application;
FIG. 2 is a diagram of a control plane protocol stack of 5G NR according to an embodiment of this application;
FIG. 3 is a diagram of a signaling interaction procedure between a terminal device and each of a network device and a core network in an access phase according to an embodiment of this application;
FIG. 4 shows a procedure in which an attacker eavesdrops on a PDCCH resource configuration and spoofs DCI according to an embodiment of this application;
FIG. 5 is a diagram of a communication method according to an embodiment of this application;
FIG. 6 is a diagram of scrambling ID allocation according to an embodiment of this application;
FIG. 7 is a diagram of a measurement report according to an embodiment of this application;
FIG. 8 is a diagram of an encryption key generation process according to an embodiment of this application;
FIG. 9 is a diagram 1 of a scrambling ID selection rule according to an embodiment of this application;
FIG. 10 is a diagram 2 of a scrambling ID selection rule according to an embodiment of this application;
FIG. 11 is a diagram 3 of a scrambling ID selection rule according to an embodiment of this application;
FIG. 12 is a diagram of a conflict between scrambling-specific parameters according to an embodiment of this application;
FIG. 13 is a diagram of enhancing PDCCH security protection according to an embodiment of this application;
FIG. 14 is a diagram of physical layer PDCCH encryption according to an embodiment of this application;
FIG. 15 is a diagram of constellation phase rotation encryption according to an embodiment of this application;
FIG. 16 is a diagram of data and pilot subcarrier hybrid interleaving encryption according to an embodiment of this application;
FIG. 17 is a diagram of enhancing PDSCH security protection according to an embodiment of this application;
FIG. 18 is a diagram of enhancing PUSCH security protection according to an embodiment of this application;
FIG. 19 is a diagram 1 of a structure of a communication apparatus according to an embodiment of this application; and
FIG. 20 is a diagram 2 of a structure of a communication apparatus according to an embodiment of this application.

DESCRIPTION OF EMBODIMENTS

Technical solutions in embodiments of this application may be applied to various communication systems such as a 4th generation (4th generation, 4G) mobile communication system and a 5th generation (5th generation, 5G) new radio (new radio, NR) mobile communication system. The technical solutions provided in this application may be further applied to a future communication system, for example, a 6th generation mobile communication system. Alternatively, the communication system may be an internet of things (internet of things, IoT) network or another network.

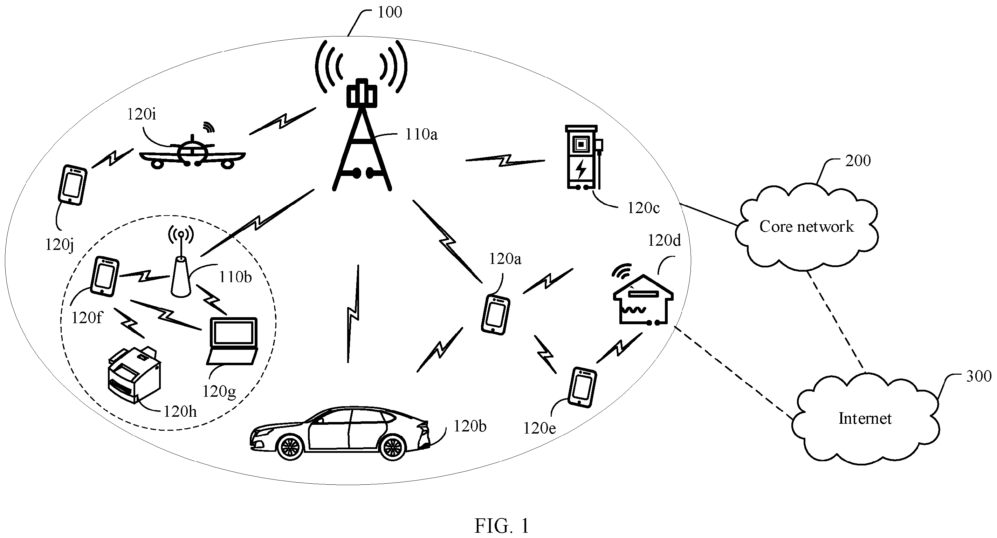

An architecture of a communication system to which embodiments of this application are applied may be shown in FIG. 1. The communication system includes a radio access network 100 and a core network 200. Optionally, the communication system may further include an internet 300. The radio access network 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, the mobile phones in FIG. 1 include 120a, 120e, 120f, and 120j. The mobile phone 120a may access the base station 110a, be connected to the vehicle 120b, directly communicate with the mobile phone 120e, and access the HAP. The mobile phone 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

Wireless communication is performed between the terminal device and the network device, and the network device is connected to the core network (for example, an evolved packet core (evolved packet core, EPC) in a 4G mobile communication system or a core network (5G core, 5GC) in a 5G mobile communication system). A core network device and the network device may be different physical devices independent of each other; or functions of a core network device and logical functions of the network device may be integrated into a same physical device; or some functions of a core network device and some functions of the network device may be integrated into one physical device. Terminal devices may be connected to each other and network devices may be connected to each other in a wired or wireless manner. FIG. 1 is merely a diagram. The communication system may further include another device, for example, a wireless relay device and a wireless backhaul device, which are not drawn in FIG. 1.

The network device may also be referred to as a radio access network device, and may be a base station (base station), an evolved NodeB (evolved NodeB, eNodeB), a NodeB (NodeB), a transmission reception point (transmission reception point, TRP), an access point, a base station transceiver, a transceiver function, a radio transceiver, a basic service set (basic service set, BSS), an extended service set (extended service set, ESS), a next generation NodeB (next generation NodeB, gNB) in the 5th generation (5th generation, 5G) mobile communication system, a base station in a future mobile communication system, an access node in a Wi-Fi system, or the like; or may be a module or a unit that completes some functions of a base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement a function of a service data adaptation protocol (service data adaptation protocol, SDAP). The DU implements functions of a radio link control layer and a medium access control (medium access control, MAC) layer of the base station, and may further implement a part or all of functions of a physical layer. For specific descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used for the network device are not limited in embodiments of this application.

The network device may perform one or more of the following functions: user data and control signaling transmission, user data or air interface signaling encryption and decryption, integrity protection, header compression, a mobility control function (for example, a handover or dual connectivity), inter-cell interference coordination, connection establishment and release, load balancing, NAS message distribution, NAS node selection, synchronization, paging, positioning and transferring warning information, radio access network (radio access network, RAN) sharing, multimedia broadcast multicast service (multimedia broadcast multicast service, MBMS), user and device tracking, RAN information management (RAN information management, RIM), and the like. A plurality of network devices may directly or indirectly communicate with each other through a backhaul network (an X2 or Xn interface). The network device may perform wireless communication with the terminal device, and provide the terminal device with an access point to an EPC or a 5GC core network. Each network device may provide a communication service for a terminal device user in a corresponding geographical coverage area.

The terminal device may also be referred to as a terminal, user equipment (user equipment, UE), a station, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a user agent, a mobile client, a client, or the like. The terminal device may be widely used in various scenarios such as device-to-device (device-to-device, D2D), vehicle to everything (vehicle to everything, V2X) communication, machine-type communication (machine-type communication, MTC), an IOT, virtual reality, augmented reality, industrial control, self-driving, telemedicine, smart grid, smart furniture, smart office, smart wear, smart transportation, and smart city. The terminal device may be a cellular phone, a mobile phone, a session initiation protocol (session initiation protocol, SIP) phone, a tablet computer, a computer with a wireless transceiver function, a personal digital assistant (personal digital assistant, PDA), a wearable device, a vehicle, an uncrewed aerial vehicle, a helicopter, an airplane, a ship, a robot, a robot arm, a smart home device, a medical care device, or the like; or may be an IoT device such as a parking timer, a smart meter, a fuel pump, a vehicle, or a Holter monitor. A specific technology and a specific device form that are used for the terminal device are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. An application scenario of the network device and the terminal device is not limited in embodiments of this application.

Communication between the network device and the terminal device, between network devices, or between terminal devices may be performed by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When communicating with the serving cell, the terminal device is further interfered with by a signal from a neighboring cell.

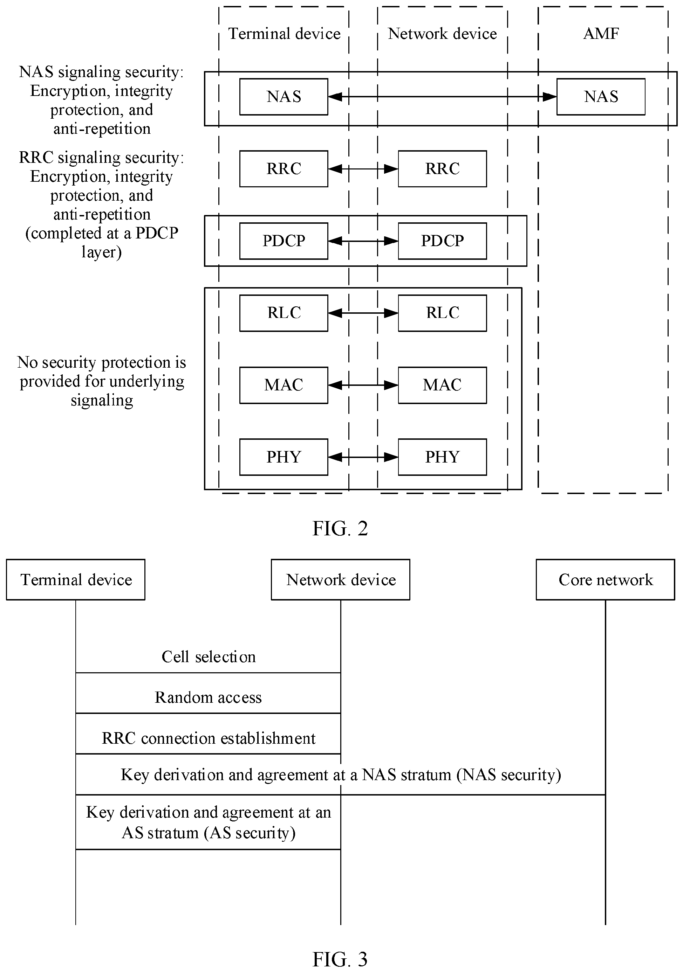

A control plane protocol stack of 5G NR is the same as a control plane protocol stack of 4G long term evolution (long term evolution, LTE). FIG. 2 is a diagram of a control plane protocol stack of 5G NR according to an embodiment of this application. As shown in FIG. 2, the control plane protocol stack includes a physical (physical, PHY) layer (which may also be referred to as an L1 layer), a medium access control (medium access control, MAC) layer, a radio link control (radio link control, RLC) layer, a packet data convergence protocol (packet data convergence protocol, PDCP) layer, a radio resource control (radio resource control, RRC) layer, and a non-access stratum (non-access stratum, NAS). A layer other than the NAS stratum may be referred to as an access stratum (access stratum, AS). On a terminal device side, all protocol stacks are located in the terminal device. On a network side, the NAS stratum is not located on the network device, but is located on an AMF entity in the core network.

FIG. 3 is a diagram of a signaling interaction procedure between a terminal device and each of a network device and a core network in an access phase. The terminal device performs cell selection in an initial access phase, and then performs random access to establish a connection to the network device, to complete RRC connection establishment. Then, the terminal device and the core network (for example, the AMF entity in the core network) perform bidirectional identity authentication. After authentication succeeds, key derivation and agreement at the NAS and the AS stratum are started. Before NAS security and AS security modes are completed (SecurityModeComplete), security protection is provided for none of air interface signaling, including RRC signaling and NAS signaling. After NAS security and AS security are completed, encryption and integrity protection can be enabled for RRC, NAS signaling, and user-plane data.

However, the foregoing security protection solution provides only security protection for NAS signaling and RRC signaling. For the 4G mobile communication system and the 5G mobile communication system, a PDCP layer at the AS stratum provides a signaling transmission service for an RRC layer, implements encryption and integrity protection for RRC signaling, and implements decryption and integrity check for RRC signaling in a reverse direction. However, no security protection is provided for signaling at each protocol sublayer below the PDCP layer. For example, no security protection is provided for PHY layer signaling and MAC layer signaling such as MAC CE, UCI, and DCI. An attacker may eavesdrop and tamper with these pieces of underlying signaling, which may cause problems such as service interruption of an authorized terminal device, service performance deterioration of the terminal device, abnormal power consumption of the terminal device, and abnormal resource scheduling of the network device.

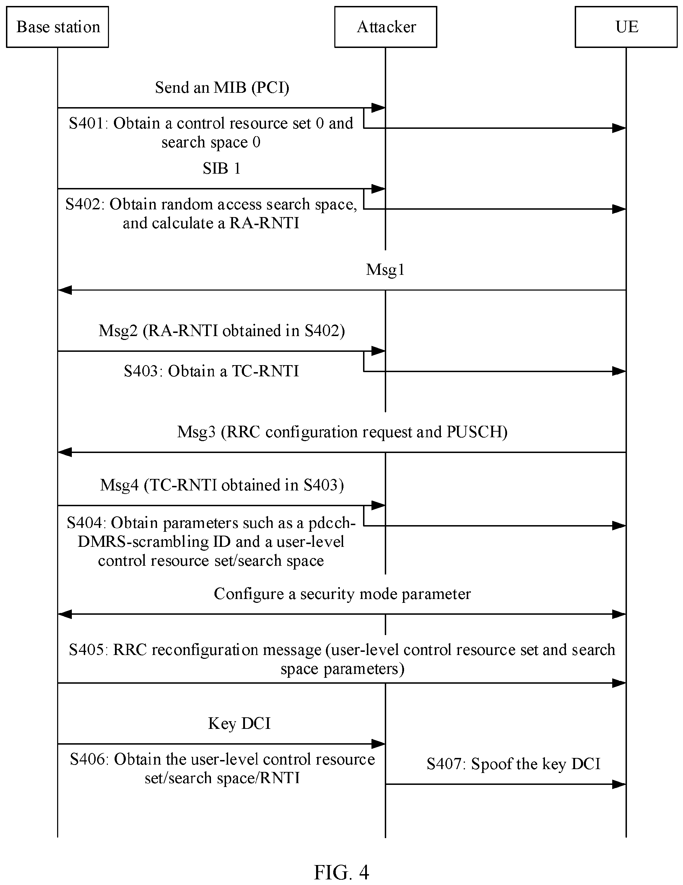

The DCI is taken as an example. No security protection is provided for DCI that serves as a message carried on a PDCCH. The attacker may eavesdrop and tamper with the message, which may cause problems such as service interruption of an authorized terminal device, service performance deterioration of the terminal device, abnormal power consumption of the terminal device, and abnormal resource scheduling of the network device. The network device is a base station, and the terminal device is UE. As shown in FIG. 4, a procedure in which the attacker eavesdrops on a PDCCH resource configuration and spoofs DCI includes the following steps.

S401: The attacker listens, on a broadcast channel (physical broadcast channel, PBCH), to a master information block (master information block, MIB) sent by an authorized base station, and obtains information element parameters, namely, a control resource set (CORESET) 0 and search space (SearchSpace) 0 in the MIB, where the MIB may carry a physical cell identifier (physical cell identifier, PCI).

S402: The attacker listens to DCI of a system information block (system information block, SIB) 1 on a PDCCH CORESET 0 and SearchSpace 0, and obtains information such as a time-frequency resource location of the SIB 1; listens to the SIB 1 on a physical downlink shared channel (physical downlink shared channel, PDSCH) channel, to obtain an information element RACH-ConfigCommon in the SIB 1, indicating a configuration such as a random access channel (random access channel) time-frequency resource/preamble/response window; and calculates a possible value (used to receive a random access message 2 (Msg2)) of a random access radio network temporary identifier (random access radio network temporary identifier, RA-RNTI) based on these parameters.

S403: The attacker listens to Msg2 based on the RA-RNTI, and obtains a temporary cell radio network temporary identifier (temporary cell RNTI, TC-RNTI) carried in Msg2.

S404: The attacker listens to a random access message 4 (Msg4) based on the TC-RNTI, and obtains a parameter such as user-level CORESET/SearchSpace of an information element bandwidth part (bandwidth part, BWP) 0 in Msg4. The UE contends for random access. After contention succeeds, the TC-RNTI is upgraded to a cell radio network temporary identifier (cell RNTI, C-RNTI). The attacker can obtain, through listening, a C-RNTI allocated by the authorized base station to a user.

S405: The authorized base station delivers an encrypted RRC reconfiguration message (RRC reconfiguration), where the user-level CORESET and SearchSpace parameters may be the same as those delivered in a plaintext form in Msg4.

S406: Optionally, the attacker continues to listen to key DCI delivered by the authorized base station, performs blind detection for a plurality of times, and further guesses a parameter configuration of user-level CORESET and SearchSpace.

S407: The attacker spoofs the key DCI based on the user-level CORESET and SearchSpace parameters obtained in the foregoing steps.

In the foregoing procedure, a DCI format (format) includes downlink PDSCH scheduling, uplink PUSCH scheduling, a slot format indication, a resource preemption indication, transmission power control, sidelink (sidelink) scheduling, multicast broadcast service (multicast broadcast services, MBS) scheduling, and the like. For different DCI formats, refer to section 7.3.1 in the 3rd generation partnership project (3rd generation partnership project, 3GPP) standard TS38.212.

PDCCH SearchSpace includes common SearchSpace and UE-specific SearchSpace. Common SearchSpace is mainly used to transmit scheduling DCI of system information, a random access response (random access response, RAR), a paging message, and the like. UE-specific SearchSpace is mainly used to transmit user-specific information, for example, uplink/downlink user data scheduling or an uplink (uplink, UL) grant (grants). For common SearchSpace, the attacker may determine a location of common SearchSpace based on a cell common parameter delivered by the authorized base station, and then perform attacks such as interference, spoofing, and tampering on authorized UE. UE-dedicated SearchSpace is mainly delivered through Msg4 and the RRC reconfiguration message. If UE-specific CORESET and SearchSpace information element parameters delivered through the RRC reconfiguration message are completely the same as or partially the same as those delivered through Msg4, the attacker can perform blind detection on UE-specific DCI delivered by the authorized base station, and guess the UE-specific CORESET and SearchSpace information element parameters. Consequently, the attacker can easily perform attacks such as interference, spoofing, and tampering on the authorized UE.

The attacker can spoof DCI format 1_0 scrambled by using the P-RNTI at a paging occasion (paging occasion, PO) location. The DCI includes a short message (short message), indicating a system message change. A tampered system message may be used to further prohibit calling and called services of the authorized UE. The attacker may alternatively spoof a DCI instruction of a PDCCH order based on the C-RNTI, so that the authorized UE continuously initiates random access and cannot obtain a normal network service. The attacker may alternatively listen to a DCI activation instruction of a UL grant type (type) 2 delivered by the authorized base station, and obtain UE-specific parameters such as a configured scheduling RNTI (configured scheduling RNTI, CS-RNTI) and user-level CORESET/-

SearchSpace by performing blind detection for a plurality of times. In this way, the attacker spoofs a DCI deactivation instruction, so that the user cannot use a grant-free scheduling resource, and the UE cannot reach a short-delay performance indicator.

The attacker may eavesdrop the MIB, the SIB 1, Msg2, and Msg4, to obtain common CORESET and Search-Space, or obtain user-specific CORESET and SearchSpace of a BWP 0 delivered in Msg4 in a plaintext form, and obtain a temporary identifier such as a C-RNTI of an authorized user. Therefore, key DCI signaling can be spoofed and tampered with. Although user-specific CORESET and SearchSpace are re-delivered through the RRC reconfiguration message with encryption and integrity protection, if user-specific CORESET and SearchSpace parameters in the RRC reconfiguration are partially the same as user-specific CORESET and SearchSpace parameters in Msg4, for example, a PDCCH demodulation reference signal (demodulation reference signal, DMRS) scrambling ID (pdcch-DMRS-ScramblingID) parameter, the attacker can easily crack user-specific DCI with a small amount of time and low costs. The attacker may alternatively spoof the authorized UE to access a base station and obtain user-specific CORESET and SearchSpace configurations. If a plurality of users served by a same base station have many same CORESET and SearchSpace parameter configurations, for example, a same parameter such as a frequency domain resource (frequencyDomainResources) in the CORESET information element, the attacker can easily crack and spoof DCI sent to other UE.

In view of this, this application provides a communication method and apparatus, to improve security of underlying signaling transmitted between a network device and a terminal device, and enhance security strength of anti-eavesdropping and anti-tampering of the underlying signaling. The following describes in detail embodiments of this application with reference to accompanying drawings.

In addition, it should be understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, a first random number and a second random number do not indicate different priorities, importance degrees, or the like corresponding to the two random numbers.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one item (piece) of a, b, or c indicates: a, b, c, a and b, a and c, b and c, or a, b, and c, where a, b, and c may be singular or plural.

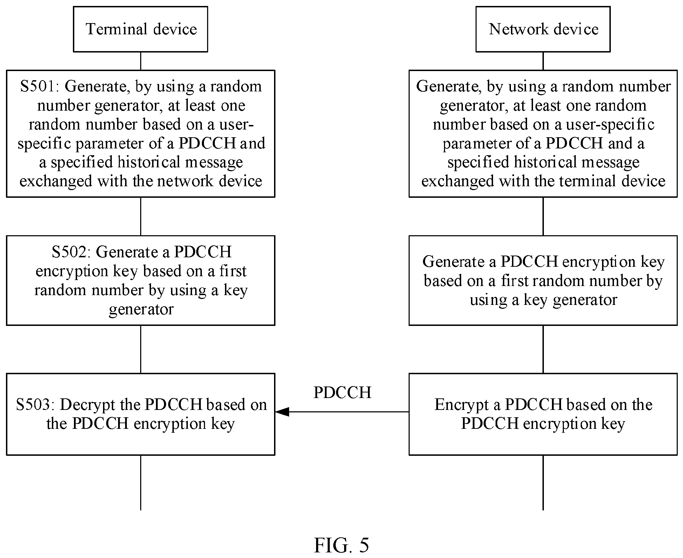

FIG. 5 is a diagram of a communication method according to an embodiment of this application. In FIG. 5, the method is described by using an example in which a terminal device and a network device serve as execution bodies. This application does not limit an execution body of the method. For example, the terminal device in FIG. 5 may alternatively be a chip, a chip system, or a processor that can support the terminal device in implementing the method, or may be a logical module or software that can implement all or some of functions of the terminal device. Alternatively, the network device in FIG. 5 may be a chip, a chip system, or a processor that supports the network device in implementing the method, or may be a logical module or software that can implement all or some of functions of the network device. In addition, in FIG. 5, descriptions are provided by using an example in which a physical channel is a PDCCH. It may be understood that the physical channel may alternatively be a PDSCH, a PUCCH, a PUSCH, or the like. The method includes the following steps.

S501: The terminal device generates, by using a random number generator, at least one random number based on a user-specific parameter of the PDCCH from the network device and a specified historical message exchanged between the terminal device and the network device, where the at least one random number includes a first random number.

In this embodiment of this application, the user-specific parameter that is of the PDCCH and that is sent by the network device to the terminal device may be information element parameters such as a PDCCH scrambling ID (for example, pdcch-DMRS-ScramblingID) and time-frequency resource information of user-level CORESET/SearchSpace that are delivered by the network device to the terminal device by using an RRC reconfiguration message. Optionally, to prevent an attacker from learning of the user-specific parameter of the PDCCH, the user-specific parameter that is of the PDCCH and that is sent by the network device to the terminal device is not the same as a user-specific parameter that is of the PDCCH and that is sent by the network device in a plaintext form, and is randomly configured by the network device, to increase randomness and unpredictability of the user-specific parameter that is of the PDCCH and that is sent by the network device to the terminal device. For example, when the user-specific parameter of the PDCCH is pdcch-DMRS-ScramblingID in the RRC reconfiguration message, a value of pdcch-DMRS-ScramblingID in the RRC reconfiguration message is different from a value of pdcch-DMRS-ScramblingID in a random access message (Msg4) sent by the network device, and is randomly configured by the network device, to increase randomness and unpredictability of pdcch-DMRS-ScramblingID, and prevent pdcch-DMRS-ScramblingID from being obtained or predicted by the attacker.

For example, the user-specific parameter of the PDCCH is pdcch-DMRS-ScramblingID delivered by the network device by using the RRC reconfiguration message. pdcch-DMRS-ScramblingID is related to generation of a PDCCH scrambling sequence and a PDCCH pilot sequence (for example, a PDCCH DMRS sequence). To avoid confusion between DCI sent to different terminal devices in a cell, it needs to be ensured as much as possible that PDCCH scrambling sequences and PDCCH pilot sequences of different terminal devices in a same cell do not conflict simultaneously. Usually, during cell deployment, physical shared channel (physical shared channel, PSCH) mod 3 interference of different cells is avoided. In other words, cells with a same physical cell identifier (physical cell identifier, PCI) mod (Mod) 3 usually are not deployed together.

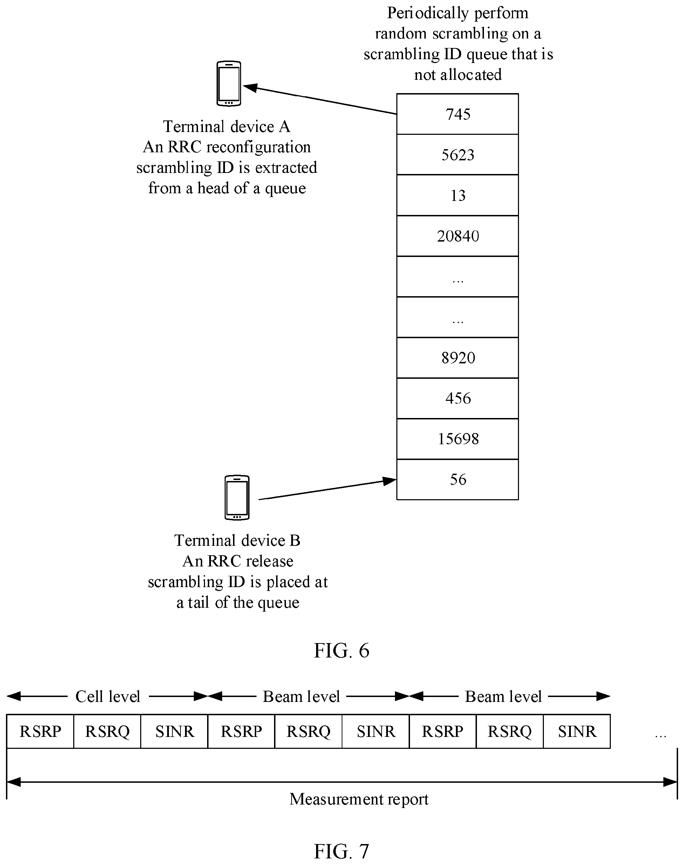

To ensure randomness and unpredictability of pdcch-DMRS-ScramblingID in the RRC reconfiguration message, the network device may configure pdcch-DMRS-ScramblingID in the following manner. Currently, pdcch-DMRS-ScramblingID in the 3GPP standard has a length of 16 bits, and has 65536 value spaces. The network device may first remove a pdcch-DMRS-ScramblingID set configured and used in Msg4 in a plaintext form. For example, there are 4800 pdcch-DMRS-ScramblingID. Then, a remaining pdcch-DMRS-ScramblingID value set is divided into three groups based on a case in which PCI mod 3 is equal to 0, 1, or 2. A quantity of pdcch-DMRS-ScramblingID in each group is floor(65536-4800)/3=24245. Herein, floor indicates rounding down. Each cell of the network device selects a corresponding pdcch-DMRS-ScramblingID value set based on PCI mod 3 of the cell, to allocate a value of pdcch-DMRS-ScramblingID of a user in the cell. In addition, random allocation is maintained as much as possible. FIG. 6 is a diagram of scrambling ID (for example, pdcch-DMRS-ScramblingID) allocation. The network device may periodically perform random scrambling on a scrambling ID queue that is not allocated in a cell in which the terminal device is located, and extract a new scrambling ID from a head of the queue when the new scrambling ID is delivered to a user by using the RRC reconfiguration message. After an RRC connection of the user is released, a corresponding scrambling ID is placed at a tail of the queue.

The specified historical message exchanged between the terminal device and the network device may be sent by the terminal device to the network device, and the network device confirms a received historical message; or the specified historical message may be delivered by the network device to the terminal device, and the terminal device confirms a received message. For example, the specified historical message may be a measurement value in a measurement report (measurement report, MR) in RRC signaling reported by the terminal device to the network device, or may be a NAS message, for example, a dedicated NAS message (DedicatedNAS-Message) for transmitting UE-specific (specific) NAS stratum signaling.

For example, the specified historical message exchanged between the terminal device and the network device is an L3 layer measurement value in the measurement report. A measurement object is a serving cell and a neighboring cell. The measurement value includes beam measurement values (for example, a beam ID, reference signal received power (reference signal receiving power, RSRP), reference signal received quality (reference signal receiving quality, RSRQ), a signal to interference plus noise ratio (signal to interference plus noise ratio, SINR), and the like) of the serving cell and the neighboring cell. The network device may configure the measurement report to be periodically fed back. When the random number is generated, a specified historical message used by the terminal device or the network device is a most recently exchanged specified historical message obtained by the terminal device or the network device based on a specified periodicity (for example, a periodicity configured by the network device). As shown in FIG. 7, a measurement value in an L3 RRC signaling MR measurement report may include RSRP, RSRQ, and an SINR at a cell (for example, a serving cell of the terminal device) level, and RSRP, RSRQ, and an SINR at a beam (for example, one or more beams corresponding to the serving cell of the terminal device) level.

For example, the specified historical message exchanged between the terminal device and the network device is an L1 layer measurement value in the measurement report. A measurement object is a serving cell of the terminal device, and the measurement value (namely, a measurement feedback amount) includes a channel measurement amount (including a precoding matrix indication (precoding matrix indication, PMI), a channel quality indicator (channel quality indicator, CQI), a rank indicator RI (rank indication, RI), and the like) and a beam measurement amount (for example, a beam ID and corresponding RSRP) of the serving cell. The L1 measurement feedback amount usually includes frequency-domain subband-level measurement information. There is richer feedback information and a shorter feedback period. Therefore, it is difficult for the attacker to always perform eavesdropping and tracing.

The random number generator may be referred to as a randomness extractor, and may be a hash algorithm, a deterministic random bit generator (deterministic random bit generator, DRBG), a one-way hash algorithm deterministic random bit generator (Hash-DRBG), a hash information authentication code deterministic random bit generator (hash-based message authentication code DRBG, HMAC-DRBG), a counter mode deterministic random bit generator (counter DRBG, CTR_DRBG), and the like. The DRBG is also referred to as a pseudo random number generator (pseudo random number generator, PRNG).

After obtaining the user-specific parameter of the PDCCH from the network device and the specified historical message exchanged between the terminal device and the network device, the terminal device may generate the at least one random number based on the user-specific parameter and the specified historical message by using the random number generator.

S502: The terminal device generates a PDCCH encryption key based on the first random number by using a key generator.

In this embodiment of this application, the key generator may derive (or generate) the PDCCH encryption key by using a cryptographic key derivation algorithm, a chaotic mathematical model, or the like.

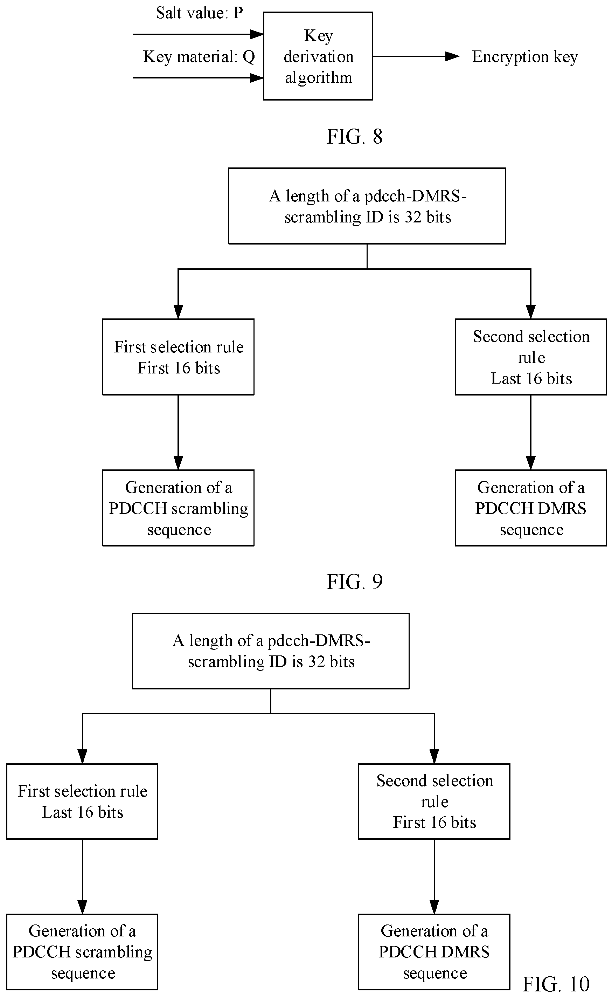

In an example, the key generator may use a password-based key derivation function 2 (password-based key derivation function 2, PBKDF2), a scrypt key derivation algorithm, or the like, or may use a key-based key derivation algorithm (key-based key derivation function, KBKDF) with a relatively faster computing speed, for example, a key derivation algorithm such as a counter mode-based KDF, a feedback mode-based KDF, and a double-pipeline iteration mode-based KDF mentioned in SP800 (SP800 is a series of guidelines on information security released by the national institute of standards and technology (national institute of standards and technology, NIST)). As shown in FIG. 8, when the PDCCH encryption key is generated based on the key derivation algorithm, two random numbers (for example, two first random numbers used to generate the PDCCH encryption key) generated by using the random number generator may be respectively used as a key material (key): Q and a salt value (salt): P, and the key derivation algorithm is input to generate the PDCCH encryption key.

In another example, the key generator may use, as a chaotic parameter based on a specific combination rule by using a mathematical model such as chaotic distribution, one or more first random numbers output by the random number generator to generate the PDCCH encryption key, to generate "long random chaotic sequence x" based on chaotic mapping. A length of the long random chaotic sequence may support different physical layer encryption keys of each signaling within a PDCCH encryption key updating period. For example, if the updating period is 20 ms, there are a total of 40 slots (slot), and physical layer encryption needs to be performed on 5000 constellation points in each slot, a length of a long random chaotic sequence that may be generated is 200000=40*5000. In this case, different physical layer encryption keys are used in all the slots. The mathematical model such as the chaotic distribution may be a chaotic logistic (logistic) model, a chaotic Chebyshev (Chebyshev) model, or the like.

(1) The chaotic logistic model is used, and it may be set that $y_0$=P (Chaotic initial value=First random number 1), and $\mu$=Q (Bifurcation parameter=First random number 2). An element value (x) in the long random chaotic sequence may be determined based on the following formula, and is used as the PDCCH encryption key. A value of x ranges from -1 to 1.

$$y_{n+1} = \mu * y_n(1 - y_n), y \in (0.0, 1.0), 3.569945672 < \mu \leq 4.0;$$

and

$$x = 1 - 2 * y, x \in (-1.0, 1.0).$$

(2) The chaotic Chebyshev model is used, and it may be chosen to set that $x_0$=P (Chaotic initial value=First random number 1), and $\mu$=Q (Bifurcation parameter=First random number 2). A value of each element ($x_{n+1}$) in the long random chaotic sequence may be determined based on the following formula, and is used as the PDCCH encryption key.

$$x_{n+1} = \cos(\mu * \cos^{-1}(x_n)), x \in (-1.0, 1.0), 2.0 < \mu$$

It may be understood that the terminal device may periodically generate the PDCCH encryption key based on a key generation period, and update a used PDCCH encryption key, to improve security. In some implementations, to avoid a repetition of the generated PDCCH encryption key, the terminal device may further add anti-replay information to the PDCCH encryption key generated by using the key generator. The anti-replay information may be a transmit frequency, a PCI, a timestamp, or the like. The timestamp may be time domain information such as a system frame number and a slot number when the PDCCH encryption key is updated. The terminal device may also use the anti-reply information as an input into the key generator, for example, splice the anti-replay information with the salt value: P as a new salt value: P; or may splice the anti-replay information with the PDCCH encryption key output by the key generator to obtain a new PDCCH encryption key.

S503: The terminal device decrypts the PDCCH based on the PDCCH encryption key, and correspondingly, the network device encrypts the PDCCH based on the PDCCH encryption key.

In this embodiment of this application, the network device may generate the PDCCH encryption key in a manner

**EP 4 593 338 A1**

similar to that of the terminal device. For a specific process of generating the PDCCH encryption key, refer to an implementation on a terminal device side. Details are not described again.

After determining the PDCCH encryption key, the terminal device and the network device may encrypt and decrypt the PDCCH based on the PDCCH encryption key. For example, the network device may encrypt the PDCCH (for example, DCI carried on the PDCCH) based on the PDCCH encryption key, and the terminal device may also decrypt the PDCCH based on the PDCCH encryption key, to provide protection for the PDCCH (for example, the DCI carried on the PDCCH).

In some embodiments, a quantity of bits of a scrambling-specific parameter (for example, pdcch-DMRS-ScramblingID) that is of the PDCCH and that is sent by the network device to the terminal device may also be increased, and random space of the user-specific parameter is increased, to increase difficulty in cracking by the attacker.

For example, the scrambling-specific parameter of the PDCCH is pdcch-DMRS-ScramblingID, and a bit length of an information element parameter pdcch-DMRS-ScramblingID included in CORESET in a current 3GPP standard is 16 bits. In this embodiment of this application, 16 bits may be used as a first threshold, and a quantity of bits of pdcch-DMRS-ScramblingID is increased, so that a length of pdcch-DMRS-ScramblingID is greater than the first threshold, for example, is 24, 28, or 32 bits. pdcch-DMRS-ScramblingID is used for generation of the PDCCH scrambling sequence and generation of the PDCCH pilot sequence at a physical layer. When the length of pdcch-DMRS-ScramblingID is increased, in this embodiment of this application, a selection rule of selecting a value of pdcch-DMRS-ScramblingID may be separately configured for the PDCCH scrambling sequence and the PDCCH pilot sequence, to generate the PDCCH scrambling sequence and the PDCCH pilot sequence. For example, for the PDCCH scrambling sequence, a configured first selection rule may be selecting first 16 bits, last 16 bits, or the like of pdcch-DMRS-ScramblingID, and a second selection rule may be selecting last 16 bits, first 16 bits, or the like of pdcch-DMRS-ScramblingID. The first selection rule and the second selection rule may be the same or different.

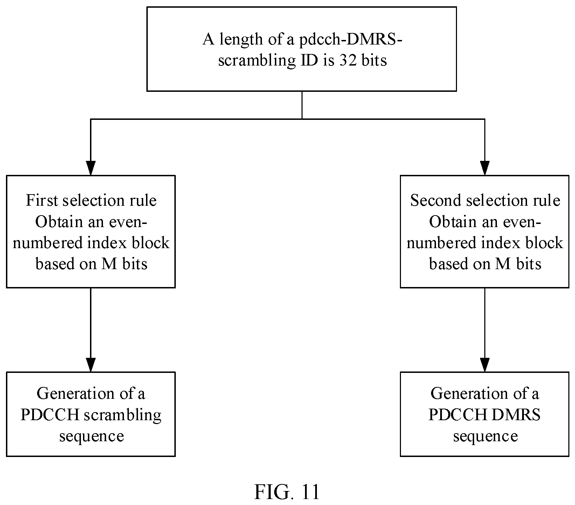

For example, the length of pdcch-DMRS-ScramblingID is 32 bits. As shown in FIG. 9, the first selection rule may be that the first 16 bits of pdcch-DMRS-ScramblingID are selected as a first sub-scrambling parameter to generate the PDCCH scrambling sequence, and the second selection rule may be that the last 16 bits of pdcch-DMRS-ScramblingID are selected as a second sub-scrambling parameter to generate the PDCCH pilot sequence (for example, a PDCCH DMRS sequence). As shown in FIG. 10, the first selection rule may be that the last 16 bits of pdcch-DMRS-ScramblingID are selected as a first sub-scrambling parameter to generate the PDCCH scrambling sequence, and the second selection rule may be that the first 16 bits of pdcch-DMRS-ScramblingID are selected as a second sub-scrambling parameter to generate the PDCCH pilot sequence (for example, a PDCCH DMRS sequence). As shown in FIG. 11, the first selection rule may be that pdcch-DMRS-ScramblingID is divided into a plurality of subblocks based on M bits (M may be 2, 4, 6, 8, or the like). For example, when M=4, pdcch-DMRS-ScramblingID is divided into eight subblocks, and each subblock has 4 bits. Even-numbered index blocks are recombined into 16 bits and used as the first sub-scrambling parameter to generate the PDCCH scrambling sequence. The second selection rule may be that pdcch-DMRS-ScramblingID is divided into a plurality of subblocks based on M bits (M may be 2, 4, 6, 8, or the like). Odd-numbered index blocks are recombined into 16 bits and used as the second sub-scrambling parameter, to generate the PDCCH pilot sequence (for example, the PDCCH DMRS sequence).

In an example, the PDCCH scrambling sequence may be a pseudo-random sequence, and initialization for generation of the PDCCH scrambling sequence may be as follows:

$$c_{\text{init}} = \left(n_{\text{RNTI}} \cdot 2^{16} + n_{\text{ID}}\right) \bmod 2^{31}$$

First sub-scrambling parameter $n_{\text{ID}}$: For terminal device-specific search space, if a higher-layer parameter pdcch-DMRS-ScramblingID is configured, $n_{\text{ID}} \in \{0,1,...,65535\}$ is equal to first 16 bits of the higher-layer parameter pdcch-DMRS-ScramblingID; and for a case in which an RNTI for scrambling a cyclic redundancy check (cyclic redundancy check, CRC) of the PDCCH in common search space is a G-RNTI, a G-CS-RNTI, an MCCH-RNTI, or the like, if a higher-layer parameter pdcch-DMRS-ScramblingID is configured on a common MBS frequency domain resource, $n_{\text{ID}} \in \{0, 1, ..., 65535\} \in \{0, 1, ..., 65535\}$ is equal to first 16 bits of the higher-layer parameter pdcch-DMRS-ScramblingID.

$n_{\text{RNTI}}$: If the higher-layer parameter pdcch-DMRS-ScramblingID is configured, $n_{\text{RNTI}}$ is equal to a C-RNTI in search space. In another case, $n_{\text{RNTI}} = 0$.

$c_{\text{init}}$ indicates an initial value of the PDCCH scrambling sequence.

The foregoing provides descriptions by using an example in which the first selection rule is selecting the first 16 bits of pdcch-DMRS-ScramblingID as the first sub-scrambling parameter. It may be understood that the first selection rule is not limited to selecting the first 16 bits of pdcch-DMRS-ScramblingID as the first sub-scrambling parameter. Alternatively, the last 16 bits of pdcch-DMRS-ScramblingID may be selected as the first sub-scrambling parameter, or the like.

The PDCCH pilot sequence (for example, the PDCCH DMRS sequence) $r_l(m)$ is generated as follows:

$$r_l(m) = \frac{1}{\sqrt{2}}\big(1 - 2 \cdot c(2m)\big) + j\frac{1}{\sqrt{2}}\big(1 - 2 \cdot c(2m+1)\big)$$

Initialization ($c_{\text{init}}$) of the pseudo-random sequence $c(i)$ is as follows:

$$c_{\text{init}} = \big(2^{17}(N_{\text{symb}}^{\text{slot}} n_{\text{s,f}}^{\mu} + l + 1)(2N_{\text{ID}} + 1) + 2N_{\text{ID}}\big)\bmod 2^{31}$$

Herein, $l$ is an OFDM symbol index in a slot, $n_{\text{s,f}}^{\mu}$ is a slot index number in a system frame, and $j$ is an imaginary unit.

The second sub-scrambling parameter $N_{\text{ID}}$ is defined as follows: For the terminal device-specific search space, if the higher-layer parameter pdcch-DMRS-ScramblingID is configured, $N_{\text{ID}} \in \{0,1, \dots ,65535\}$ is equal to the last 16 bits of the higher-layer parameter pdcch-DMRS-ScramblingID; and if the higher-layer parameter pdcch-DMRS-ScramblingID is configured in the common search space on the common MBS frequency domain resource, $N_{\text{ID}} \in \{0,1, \dots ,65535\}$ is equal to the last 16 bits of the higher-layer parameter pdcch-DMRS-ScramblingID. In another case, $N_{\text{ID}} = N_{\text{ID}}^{\text{cell}}$.

The foregoing provides descriptions by using an example in which the second selection rule is selecting the last 16 bits of pdcch-DMRS-ScramblingID as the second sub-scrambling parameter. It may be understood that the second selection rule is not limited to selecting the last 16 bits of pdcch-DMRS-ScramblingID as the first sub-scrambling parameter. Alternatively, the first 16 bits of pdcch-DMRS-ScramblingID may be selected as the first sub-scrambling parameter, or the like.

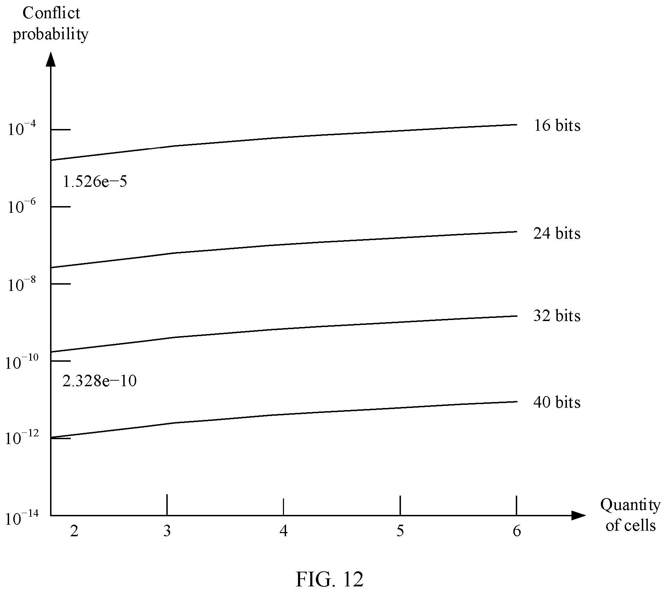

Different cells independently configure and deliver scrambling-specific parameters. There is a specific conflict probability. FIG. 12 is a diagram of a conflict between scrambling-specific parameters. A horizontal axis represents a quantity of cells, and a vertical axis represents a conflict probability of the scrambling-specific parameter. In FIG. 12, the scrambling-specific parameter is pdcch-DMRS-ScramblingID. It can be learned from FIG. 12 that when the bit length of pdcch-DMRS-ScramblingID is 16, a conflict probability of pdcch-DMRS-ScramblingID of cells is 1.526e-5. When the bit length of pdcch-DMRS-ScramblingID is 32, the conflict probability of pdcch-DMRS-ScramblingID of cells is 2.328e-10. The bit length of pdcch-DMRS-ScramblingID is increased, so that the conflict probability of dcch-DMRS-ScramblingID of the cells is greatly reduced, and inter-cell DCI sending interference is reduced.

If there are four candidate sets in the terminal device-specific search space, blind detection needs to be performed for four times. It is assumed that one time of DCI blind detection takes 5 microseconds ($\mu$s). Cracking time used when a single attacker may concurrently perform 64 threads (threads) is shown in the following formula. The attacker does not learn of the value of pdcch-DMRS-ScramblingID delivered in an encryption manner. Therefore, the attacker needs to perform traversal to try all possible values. When the bit length of pdcch-DMRS-ScramblingID is 16, it needs to take the attacker approximately 0.02 seconds to crack the DCI. When the bit length of pdcch-DMRS-ScramblingID is 32, it needs to take the attacker 1342 seconds to crack the DCI. A random bit length of pdcch-DMRS-ScramblingID is increased, so that security of the DCI can be greatly improved.

16 bits: ~5 $\mu$s*(2^16)*4 candidate sets/64/1000/1000=0.02 seconds.

32 bits: ~5 $\mu$s*(2^32)*4 candidate sets/64/1000/1000=1342 seconds.

In some implementations, to further improve security, the terminal device may further update the PDCCH scrambling sequence corresponding to the PDCCH and/or update the PDCCH pilot sequence corresponding to the PDCCH based on the random number generated by the random number generator.

In an example, when generating, by using the random number generator, the at least one random number based on the user-specific parameter of the PDCCH and the specified historical message exchanged between the terminal device and the network device, the terminal device may further generate a second random number used to update the PDCCH scrambling sequence. The second random number may be the same as or different from the first random number used to generate the PDCCH encryption key. After obtaining the second random number, the terminal device may update the PDCCH scrambling sequence based on the second random number. For example, the second random number is used as a new scrambling ID parameter to generate a new PDCCH scrambling sequence, or the first sub-scrambling parameter is selected from the second random number based on the first selection rule. The first sub-scrambling parameter is used to generate the new PDCCH scrambling sequence.

Similarly, when generating, by using the random number generator, the at least one random number based on the user-specific parameter of the PDCCH and the specified historical message exchanged between the terminal device and the network device, the terminal device may further generate a third random number used to update the PDCCH pilot sequence (for example, the PDCCH DMRS sequence). The third random number may be the same as the first random number or the second random data, or may be different from both the first random number and the second data. After obtaining the third random number, the terminal device may update the PDCCH scrambling sequence based on the third random number. For example, the third random number is used as a new scrambling ID parameter to generate a new PDCCH scrambling sequence, or the second sub-scrambling parameter is selected from the third random number based on the second selection rule. The second sub-scrambling parameter is used to generate the new PDCCH scrambling sequence.

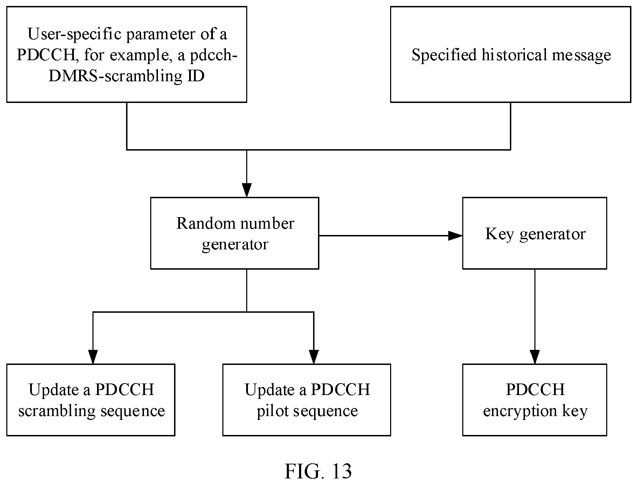

FIG. 13 is a diagram of enhancing PDCCH security protection according to an embodiment of this application. The terminal device may periodically generate, by using the random number generator, the at least one random number based on the user-specific parameter that is of the PDCCH and that is delivered by the network device by using the RRC reconfiguration message and the specified historical message exchanged between the terminal device and the network device. The user-specific parameter of the PDCCH may be a parameter such as pdcch-DMRS-ScramblingID in user-level CORESET, and the specified historical message exchanged between the terminal device and the network device may be an RRC message, for example, MeasurementReport reported by the terminal device by using an RRC message; or may be a NAS message, for example, a DedicatedNAS-Message.

The terminal device may generate, by using the key generator, the PDCCH encryption key based on the random number (for example, the first random number) generated by using the random number generator; or may update the PDCCH scrambling sequence and the PDCCH pilot sequence (for example, the PDCCH DMRS sequence) based on random numbers (for example, the second random number and the third random number) generated by using the random number generator. Similarly, the network device may also determine the PDCCH encryption key in a manner similar to that of the terminal device, and update the PDCCH scrambling sequence and the PDCCH pilot sequence (for example, the PDCCH DMRS sequence).

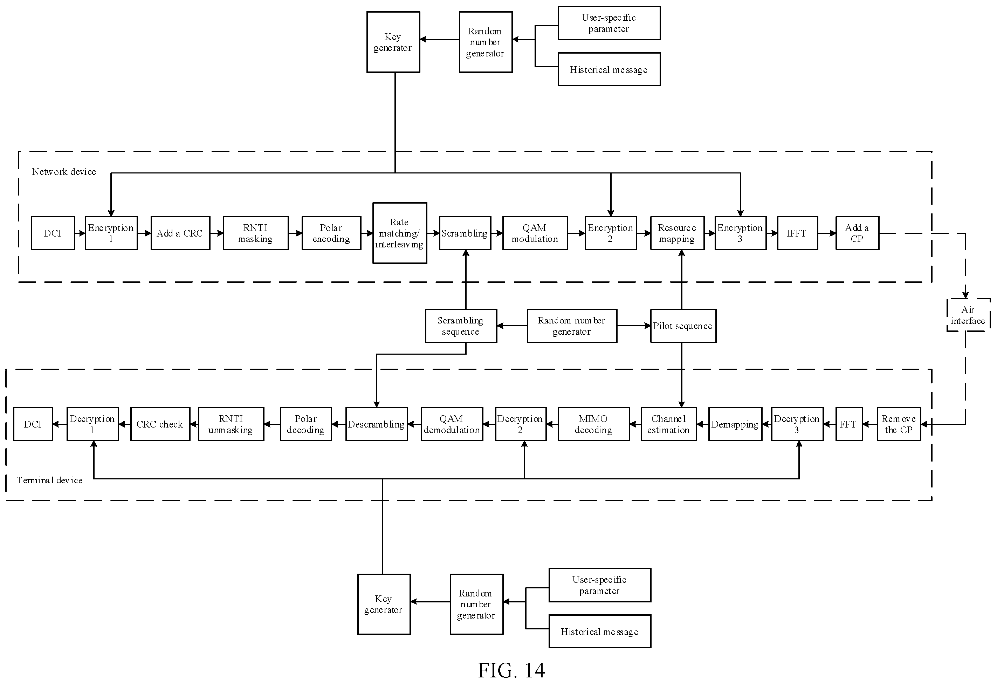

FIG. 14 is a diagram of physical layer PDCCH encryption. The network device may send PDCCH to-be-transmitted information (for example, the DCI) through an air interface by performing one or more items of processing such as adding a cyclic redundancy check (cyclic redundancy check, CRC), a radio network temporary identifier (radio network temporary identifier, RNTI) masking, polar (polar) encoding, rate matching/interleaving, scrambling, quadrature amplitude modulation (quadrature amplitude modulation, QAM) modulation, resource mapping, inverse fast Fourier transform (inverse fast fourier transform, IFFT), and adding a cyclic prefix (cyclic prefix, CP). The terminal device performs processing such as removing the CP, fast Fourier transform (fast Fourier transform, FFT), demapping, channel estimation, multiple input multiple output (multiple input multiple output, MIMO) decoding, QAM demodulation, descrambling/rate de-matching, polar decoding, RNTI de-masking, and a CRC check on a received signal, to obtain transmitted information (for example, the DCI). The network device may encrypt the PDCCH to-be-transmitted information (for example, the DCI) based on the PDCCH encryption key before the CRC is added, or before resource mapping, or after resource mapping. The terminal device may decrypt the PDCCH to-be-transmitted information based on the PDCCH encryption key after the CRC check, or after demapping, or before demapping.

In addition, the terminal device and the network device may further update the PDCCH scrambling sequence and the PDCCH pilot sequence based on the random numbers (for example, the second random number and the third random number) generated by the random number generator. The network device performs scrambling and resource mapping on the PDCCH based on a last obtained PDCCH scrambling sequence and PDCCH pilot sequence. The terminal device performs descrambling and channel estimation on the physical channel based on the last obtained PDCCH scrambling sequence and PDCCH pilot sequence.

The PDCCH to-be-transmitted information (for example, the DCI) may be encrypted through bit-level encryption by using the PDCCH encryption key. For example, before the CRC is added, a bit sequence of the transmitted information may be encrypted based on a conventional cryptographic encryption algorithm (for example, AES, Zuc, or Snow).

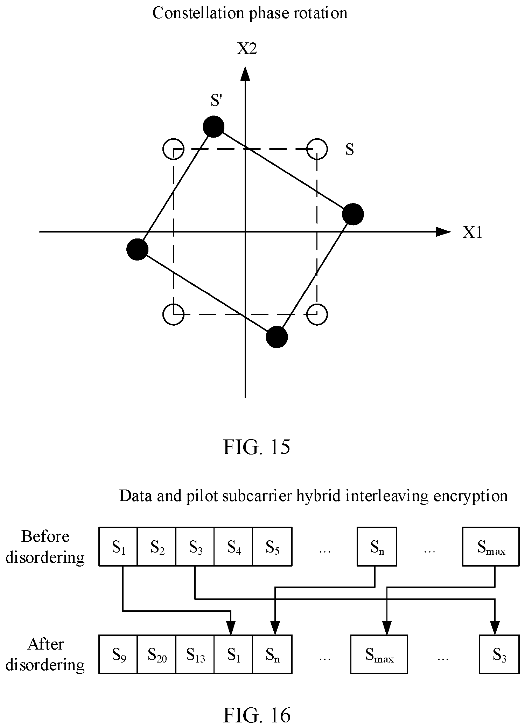

Certainly, the PDCCH to-be-transmitted information (for example, the DCI) may alternatively be encrypted by using a complex field and the PDCCH encryption key. For example, complex field encryption may be performed on the PDCCH to-be-transmitted information by performing an operation such as constellation phase rotation or data and pilot subcarrier hybrid interleaving. As shown in FIG. 15, when encryption is performed through constellation phase rotation, a constellation phase encryption key K may be first calculated. Herein, $K=x*2\pi$, and $K \in (-2\pi, 2\pi)$. Then, constellation phase rotation is performed based on K. $S'=S*e^{jK}$. Herein, S' is an encrypted constellation point, x represents an element in the PDCCH encryption key, and S is a constellation point existing before encryption, for example, data obtained after encoding and QAM modulation are performed on a PDCCH physical transmission payload. As shown in FIG. 16, when data and pilot subcarrier hybrid interleaving encryption is performed, the PDCCH encryption key may be post-processed and converted into an encrypted interleaving index, and the data and pilot subcarrier coordinate information is re-arranged and disordered, to implement encryption.

It may be understood that the foregoing provides descriptions by using an example in which the physical channel is a PDCCH. It may be understood that the physical channel may alternatively be a PDSCH, a PUCCH, a PUSCH, or the like.

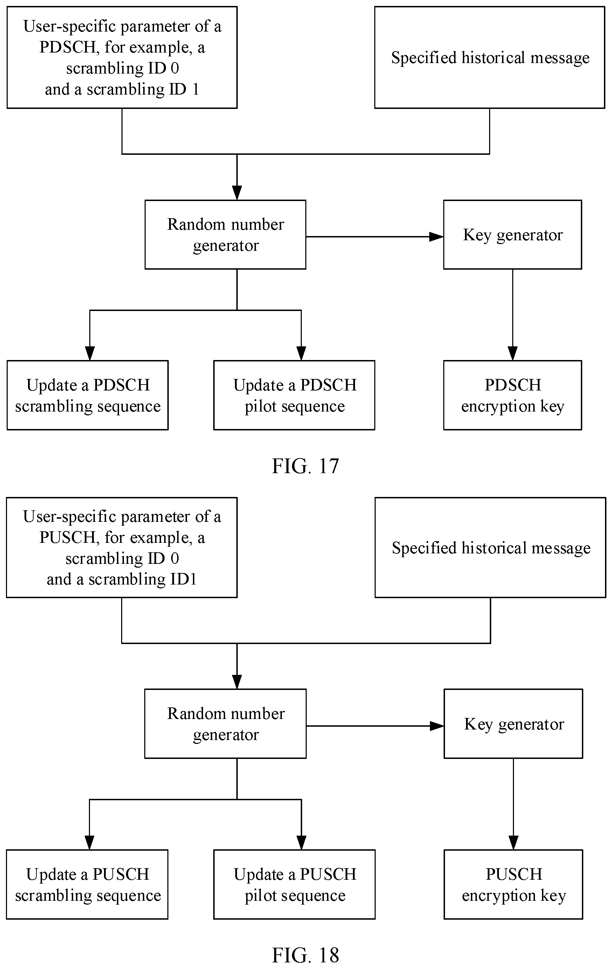

For example, the physical channel is a PDSCH. FIG. 17 is a diagram of enhancing PDSCH security protection according to an embodiment of this application. The terminal device may periodically generate, by using the random number generator, the at least one random number based on a user-specific parameter that is of a PDSCH and that is delivered by the network device by using the RRC reconfiguration message and the specified historical message exchanged between the terminal device and the network device. The user-specific parameter of the PDSCH may be an information element parameter such as a scrambling ID (for example, a data scrambling identity PDSCH (dataScramblingIdentityPDSCH)) in a user-level PDSCH configuration (PDSCH-Config), or a scrambling (scrambling) ID 0 and a scrambling ID 1 in a DMRS downlink configuration (DMRS-DownlinkConfig). The user-specific parameter of the PDSCH needs to be random and unpredictable, and cannot be the same as those sent in a plaintext form. The specified historical message exchanged between the terminal device and the network device may be an RRC message, for example, MeasurementReport reported by the terminal device by using the RRC message; or may be a NAS message, for example, DedicatedNAS-Message; or may be PDSCH payload data received by the terminal device in a same downlink HARQ process.

The terminal device may generate, by using the key generator, the PDSCH encryption key based on the random number (for example, the first random number) generated by using the random number generator; or may update the PDSCH scrambling sequence and the PDSCH pilot sequence (for example, the PDSCH DMRS sequence) based on random numbers (for example, the second random number and the third random number) generated by using the random number generator. Similarly, the network device may also determine the PDSCH encryption key in a manner similar to that of the terminal device, and update the PDSCH scrambling sequence and the PDSCH pilot sequence (for example, the PDSCH DMRS sequence).

For example, the physical channel is a PUSCH. FIG. 18 is a diagram of enhancing PUSCH security protection according to an embodiment of this application. The terminal device may periodically generate, by using the random number generator, the at least one random number based on a user-specific parameter that is of a PUSCH and that is delivered by the network device by using the RRC reconfiguration message and the specified historical message exchanged between the terminal device and the network device. The user-specific parameter of the PUSCH may be an information element parameter such as a scrambling ID (for example, a data scrambling identity PUSCH (dataScramblingIdentityPUSCH)) in a user-level PUSCH configuration (PUSCH-Config), or a scrambling ID 0 and a scrambling ID 1 in a DMRS uplink configuration (DMRS-UplinkConfig). The user-specific parameter of the PUSCH needs to be random and unpredictable, and cannot be the same as those sent in a plaintext form. The specified historical message exchanged between the terminal device and the network device may be an RRC message, for example, MeasurementReport reported by the terminal device by using the RRC message; or may be a NAS message, for example, DedicatedNAS-Message; or may be PUSCH payload data received by the terminal device in a same downlink HARQ process.

The terminal device may generate, by using the key generator, the PUSCH encryption key based on the random number (for example, the first random number) generated by using the random number generator; or may update the PUSCH scrambling sequence and the PUSCH pilot sequence (for example, the PUSCH DMRS sequence) based on random numbers (for example, the second random number and the third random number) generated by using the random number generator. Similarly, the network device may also determine the PUSCH encryption key in a manner similar to that of the terminal device, and update the PUSCH scrambling sequence and the PUSCH pilot sequence (for example, the PUSCH DMRS sequence).

It can be understood that, to implement the functions in the foregoing embodiments, the terminal device and the network device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

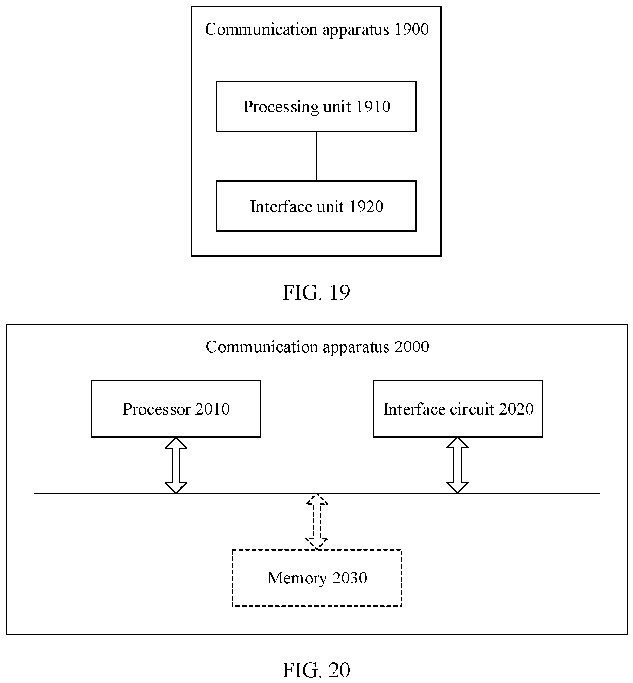

FIG. 19 and FIG. 20 each are a diagram of a structure of a possible communication apparatus according to an embodiment of this application. The communication apparatus may be configured to implement the functions of the terminal device or the network device in the foregoing method embodiments. Therefore, beneficial effects of the foregoing method embodiments can also be implemented. In a possible implementation, the communication apparatus may be a terminal device or a network device, or may be a module (for example, a chip) applied to the terminal device or the network device.

As shown in FIG. 19, the communication apparatus 1900 includes a processing unit 1910 and an interface unit 1920. The interface unit 1920 may alternatively be a transceiver unit or an input/output interface. The communication apparatus 1900 may be configured to implement the functions of the terminal device or the network device in the method embodiment shown in FIG. 7.

When the communication apparatus 1900 is configured to implement the function of the terminal device in the method embodiment shown in FIG. 5, the interface unit 1920 is configured to receive a user-specific parameter of a physical channel from a network device; the processing unit 1910 is configured to: generate, by using a random number generator, at least one random number based on the user-specific parameter and a specified historical message exchanged with the network device, where the at least one random number includes a first random number; and generate a physical channel encryption key based on the first random number by using a key generator; and the processing unit 1910 is further configured to encrypt or decrypt the physical channel based on the physical channel encryption key.

In a possible design, the at least one random number further includes a second random number, and the processing unit 1910 is further configured to: update, based on the second random number, a physical channel scrambling sequence corresponding to the physical channel; and scramble or descramble the physical channel based on an updated physical channel scrambling sequence.

In a possible design, the at least one random number further includes a third random number, and the processing unit 1910 is further configured to: update, based on the third random number, a physical channel pilot sequence corresponding to the physical channel; and perform resource mapping or channel estimation on the physical channel based on an updated physical channel pilot sequence.

In a possible design, the interface unit 1920 is further configured to receive a scrambling-specific parameter of the physical channel from the network device. A quantity of bits included in the scrambling-specific parameter is greater than a first quantity threshold. The processing unit 1910 is further configured to: generate, based on a first sub-scrambling parameter, the physical channel scrambling sequence corresponding to the physical channel, where the first sub-scrambling parameter is determined by the processing unit 1910 based on a first selection rule and the scrambling-specific parameter, and a quantity of bits included in the first sub-scrambling parameter is equal to the first quantity threshold; and generate, based on a second sub-scrambling parameter, the physical channel pilot sequence corresponding to the physical channel. The second sub-scrambling parameter is determined by the processing unit 1910 based on a second selection rule and the scrambling-specific parameter, and a quantity of bits included in the second sub-scrambling parameter is equal to the first quantity threshold.

In a possible design, when generating, by using the random number generator, the at least one random number based on the user-specific parameter and the specified historical message exchanged between the interface unit 1920 and the network device, the processing unit 1910 is specifically configured to: obtain, through the interface unit 1920 based on a specified periodicity, a specified historical message most recently exchanged with the network device; and generate the at least one random number based on the user-specific parameter and the most recently exchanged specified historical message by using the random number generator.

In a possible design, the user-specific parameter of the physical channel may be randomly configured by the network device.

For example, the physical channel may be a PDCCH, a PDSCH, a PUCCH, a PUSCH, or the like.

When the communication apparatus 1900 is configured to implement the function of the network device in the method embodiment shown in FIG. 5, the interface unit 1920 is configured to send a user-specific parameter of a physical channel to a terminal device; the processing unit 1910 is configured to generate, by using a random number generator, at least one random number based on the user-specific parameter and a specified historical message exchanged with the terminal device, where the at least one random number includes a first random number; and generate a physical channel encryption key based on the first random number by using a key generator; and the processing unit 1910 is further configured to decrypt or encrypt the physical channel based on the physical channel encryption key.

In a possible design, the at least one random number further includes a second random number, and the processing unit 1910 is further configured to: update, based on the second random number, a physical channel scrambling sequence corresponding to the physical channel; and descramble or scramble the physical channel based on an updated physical channel scrambling sequence.

In a possible design, the at least one random number further includes a third random number, and the processing unit 1910 is further configured to: update, based on the third random number, a physical channel pilot sequence corresponding to the physical channel; and perform channel estimation or resource mapping on the physical channel based on an updated physical channel pilot sequence.

In a possible design, the interface unit 1920 is further configured to send a scrambling-specific parameter of the physical channel to the terminal device. A quantity of bits included in the scrambling-specific parameter is greater than a first quantity threshold. The processing unit 1910 is further configured to: generate, based on a first sub-scrambling parameter, the physical channel scrambling sequence corresponding to the physical channel, where the first sub-scrambling parameter is determined by the processing unit 1910 based on a first selection rule and the scrambling-specific parameter, and a quantity of bits included in the first sub-scrambling parameter is equal to the first quantity threshold; and generate, based on a second sub-scrambling parameter, the physical channel pilot sequence corresponding to the physical channel. The second sub-scrambling parameter is determined by the processing unit 1910 based on a second selection rule and the scrambling-specific parameter, and a quantity of bits included in the second sub-scrambling parameter is equal to the first quantity threshold.

In a possible design, when generating, by using the random number generator, the at least one random number based on the user-specific parameter and the specified historical message exchanged with the terminal device, the processing unit 1910 is specifically configured to: obtain, through the interface unit 1920 based on a specified periodicity, a specified historical message most recently exchanged with the terminal device; and generate the at least one random number based on the user-specific parameter and the most recently exchanged specified historical message by using the random number generator.

In a possible design, the user-specific parameter of the physical channel may be randomly configured by the processing unit 1910.

For example, the physical channel may be a PDCCH, a PDSCH, a PUCCH, a PUSCH, or the like.

As shown in FIG. 20, this application further provides a communication apparatus 2000, including a processor 2010 and an interface circuit 2020. The processor 2010 and the interface circuit 2020 are coupled to each other. It can be understood that the interface circuit 2020 may be a transceiver, an input/output interface, an input interface, an output interface, a communication interface, or the like. Optionally, the communication apparatus 2000 may further include a memory 2030, configured to: store instructions executed by the processor 2010, or store input data required for running the instructions by the processor 2010, or store data generated after the processor 2010 runs the instructions. Optionally, the memory 2030 may be further integrated with the processor 2010.

When the communication apparatus 2000 is configured to implement the method shown in FIG. 7, the processor 2010 may be configured to implement a function of the processing unit 1910, and the interface circuit 2020 may be configured to implement a function of the interface unit 1920.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general purpose processor may be a microprocessor, or may be any regular processor, or the like.

The method steps in embodiments of this application may be implemented by using hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the foregoing embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

In addition, it can be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

   generating, by a terminal device by using a random number generator, at least one random number based on a user-specific parameter of a physical channel from a network device and a specified historical message exchanged between the terminal device and the network device, wherein the at least one random number comprises a first random number;
   generating, by the terminal device, a physical channel encryption key based on the first random number by using a key generator; and
   encrypting or decrypting, by the terminal device, the physical channel based on the physical channel encryption key.

2. The method according to claim 1, wherein the at least one random number further comprises a second random number, and the method further comprises:

   updating, by the terminal device based on the second random number, a physical channel scrambling sequence corresponding to the physical channel; and
   scrambling or descrambling, by the terminal device, the physical channel based on an updated physical channel scrambling sequence.

3. The method according to claim 1 or 2, wherein the at least one random number further comprises a third random number, and the method further comprises:

   updating, by the terminal device based on the third random number, a physical channel pilot sequence corresponding to the physical channel; and
   performing, by the terminal device, resource mapping or channel estimation on the physical channel based on an updated physical channel pilot sequence.

4. The method according to any one of claims 1 to 3, wherein the method further comprises:

   receiving, by the terminal device, a scrambling-specific parameter of the physical channel from the network device, wherein a quantity of bits comprised in the scrambling-specific parameter is greater than a first quantity threshold;
   generating, by the terminal device based on a first sub-scrambling parameter, the physical channel scrambling sequence corresponding to the physical channel, wherein the first sub-scrambling parameter is determined by the terminal device based on a first selection rule and the scrambling-specific parameter, and a quantity of bits comprised in the first sub-scrambling parameter is equal to the first quantity threshold; and
   generating, by the terminal device based on a second sub-scrambling parameter, the physical channel pilot sequence corresponding to the physical channel, wherein the second sub-scrambling parameter is determined by the terminal device based on a second selection rule and the scrambling-specific parameter, and a quantity of bits comprised in the second sub-scrambling parameter is equal to the first quantity threshold.

5. The method according to any one of claims 1 to 4, wherein the generating, by a terminal device by using a random number generator, at least one random number based on a user-specific parameter of a physical channel from a network device and a specified historical message exchanged between the terminal device and the network device comprises:

   obtaining, by the terminal device based on a specified periodicity, a specified historical message most recently exchanged with the network device; and
   generating, by the terminal device, the at least one random number based on the user-specific parameter and the most recently exchanged specified historical message by using the random number generator.

6. The method according to any one of claims 1 to 5, wherein the user-specific parameter of the physical channel is randomly configured by the network device.

7. The method according to any one of claims 1 to 6, wherein the physical channel is a physical downlink control channel PDCCH, a physical downlink shared channel PDSCH, a physical uplink control channel PUCCH, or a physical uplink shared channel PUSCH.

8. A communication method, comprising:

generating, by a network device by using a random number generator, at least one random number based on a user-specific parameter that is of a physical channel and that is sent to a terminal device and a specified historical message exchanged between the terminal device and the network device, wherein the at least one random number comprises a first random number;

generating, by the network device, a physical channel encryption key based on the first random number by using a key generator; and

decrypting or encrypting, by the network device, the physical channel based on the physical channel encryption key.

9. The method according to claim 8, wherein the at least one random number further comprises a second random number, and the method further comprises:

updating, by the network device based on the second random number, a physical channel scrambling sequence corresponding to the physical channel; and

descrambling or scrambling, by the network device, the physical channel based on an updated physical channel scrambling sequence.

10. The method according to claim 8 or 9, wherein the at least one random number further comprises a third random number, and the method further comprises:

updating, by the network device based on the third random number, a physical channel pilot sequence corresponding to the physical channel; and

performing, by the network device, channel estimation or resource mapping on the physical channel based on an updated physical channel pilot sequence.

11. The method according to any one of claims 8 to 10, wherein the method further comprises:

sending, by the network device, a scrambling-specific parameter of the physical channel to the terminal device, wherein a quantity of bits comprised in the scrambling-specific parameter is greater than a first quantity threshold;

generating, by the network device based on a first sub-scrambling parameter, the physical channel scrambling sequence corresponding to the physical channel, wherein the first sub-scrambling parameter is determined by the network device based on a first selection rule and the scrambling-specific parameter, and a quantity of bits comprised in the first sub-scrambling parameter is equal to the first quantity threshold; and

generating, by the network device based on a second sub-scrambling parameter, the physical channel pilot sequence corresponding to the physical channel, wherein the second sub-scrambling parameter is determined by the network device based on a second selection rule and the scrambling-specific parameter, and a quantity of bits comprised in the second sub-scrambling parameter is equal to the first quantity threshold.

12. The method according to any one of claims 8 to 11, wherein the generating, by a network device by using a random number generator, at least one random number based on a user-specific parameter that is of a physical channel and that is sent to a terminal device and a specified historical message exchanged between the terminal device and the network device comprises:

obtaining, by the network device based on a specified periodicity, a specified historical message most recently exchanged with the terminal device; and

generating, by the network device, the at least one random number based on the user-specific parameter and the most recently exchanged specified historical message by using the random number generator.

13. The method according to any one of claims 8 to 12, wherein the user-specific parameter of the physical channel is randomly configured by the network device.

14. The method according to any one of claims 8 to 13, wherein the physical channel is a physical downlink control channel PDCCH, a physical downlink shared channel PDSCH, a physical uplink control channel PUCCH, or a physical uplink shared channel PUSCH.

15. A communication apparatus, comprising an interface unit and a processing unit, wherein

the interface unit is configured to receive a user-specific parameter of a physical channel from a network device;
the processing unit is configured to: generate, by using a random number generator, at least one random number based on the user-specific parameter and a specified historical message exchanged with the network device, wherein the at least one random number comprises a first random number; and generate a physical channel encryption key based on the first random number by using a key generator; and
the processing unit is further configured to encrypt or decrypt the physical channel based on the physical channel encryption key.

16. The apparatus according to claim 15, wherein the at least one random number further comprises a second random number; and
the processing unit is further configured to: update, based on the second random number, a physical channel scrambling sequence corresponding to the physical channel; and scramble or descramble the physical channel based on an updated physical channel scrambling sequence.

17. The apparatus according to claim 15 or 16, wherein the at least one random number further comprises a third random number; and
the processing unit is further configured to: update, based on the third random number, a physical channel pilot sequence corresponding to the physical channel; and perform resource mapping or channel estimation on the physical channel based on an updated physical channel pilot sequence.

18. The apparatus according to any one of claims 15 to 17, wherein the interface unit is further configured to receive a scrambling-specific parameter of the physical channel from the network device, wherein a quantity of bits comprised in the scrambling-specific parameter is greater than a first quantity threshold; and
the processing unit is further configured to: generate, based on a first sub-scrambling parameter, the physical channel scrambling sequence corresponding to the physical channel, wherein the first sub-scrambling parameter is determined by the processing unit based on a first selection rule and the scrambling-specific parameter, and a quantity of bits comprised in the first sub-scrambling parameter is equal to the first quantity threshold; and generate, based on a second sub-scrambling parameter, the physical channel pilot sequence corresponding to the physical channel, wherein the second sub-scrambling parameter is determined by the processing unit based on a second selection rule and the scrambling-specific parameter, and a quantity of bits comprised in the second sub-scrambling parameter is equal to the first quantity threshold.

19. The apparatus according to any one of claims 15 to 18, wherein when generating, by using the random number generator, the at least one random number based on the user-specific parameter and the specified historical message exchanged between the interface unit and the network device, the processing unit is specifically configured to: obtain, through the interface unit based on a specified periodicity, a specified historical message most recently exchanged with the network device; and generate the at least one random number based on the user-specific parameter and the most recently exchanged specified historical message by using the random number generator.

20. The apparatus according to any one of claims 15 to 19, wherein the user-specific parameter of the physical channel is randomly configured by the network device.

21. The apparatus according to any one of claims 15 to 20, wherein the physical channel is a physical downlink control channel PDCCH, a physical downlink shared channel PDSCH, a physical uplink control channel PUCCH, or a physical uplink shared channel PUSCH.

22. A communication apparatus, comprising an interface unit and a processing unit, wherein

the interface unit is configured to send a user-specific parameter of a physical channel to a terminal device;
the processing unit is configured to: generate, by using a random number generator, at least one random number based on the user-specific parameter and a specified historical message exchanged with the terminal device, wherein the at least one random number comprises a first random number; and generate a physical channel encryption key based on the first random number by using a key generator; and
the processing unit is further configured to decrypt or encrypt the physical channel based on the physical channel encryption key.

23. The apparatus according to claim 22, wherein the at least one random number further comprises a second random number; and

the processing unit is further configured to: update, based on the second random number, a physical channel scrambling sequence corresponding to the physical channel; and descramble or scramble the physical channel based on an updated physical channel scrambling sequence.

24. The apparatus according to claim 22 or 23, wherein the at least one random number further comprises a third random number; and

the processing unit is further configured to: update, based on the third random number, a physical channel pilot sequence corresponding to the physical channel; and perform channel estimation or resource mapping on the physical channel based on an updated physical channel pilot sequence.

25. The apparatus according to any one of claims 22 to 24, wherein the interface unit is further configured to send a scrambling-specific parameter of the physical channel to the terminal device, wherein a quantity of bits comprised in the scrambling-specific parameter is greater than a first quantity threshold; and

the processing unit is further configured to: generate, based on a first sub-scrambling parameter, the physical channel scrambling sequence corresponding to the physical channel, wherein the first sub-scrambling parameter is determined by the processing unit based on a first selection rule and the scrambling-specific parameter, and a quantity of bits comprised in the first sub-scrambling parameter is equal to the first quantity threshold; and generate, based on a second sub-scrambling parameter, the physical channel pilot sequence corresponding to the physical channel, wherein the second sub-scrambling parameter is determined by the processing unit based on a second selection rule and the scrambling-specific parameter, and a quantity of bits comprised in the second sub-scrambling parameter is equal to the first quantity threshold.

26. The apparatus according to any one of claims 22 to 25, wherein when generating, by using the random number generator, the at least one random number based on the user-specific parameter and the specified historical message exchanged with the terminal device, the processing unit is specifically configured to: obtain, through the interface unit based on a specified periodicity, a specified historical message most recently exchanged with the terminal device; and generate the at least one random number based on the user-specific parameter and the most recently exchanged specified historical message by using the random number generator.

27. The apparatus according to any one of claims 22 to 26, wherein the user-specific parameter of the physical channel is randomly configured by the processing unit.

28. The apparatus according to any one of claims 22 to 27, wherein the physical channel is a physical downlink control channel PDCCH, a physical downlink shared channel PDSCH, a physical uplink control channel PUCCH, or a physical uplink shared channel PUSCH.

29. A chip system, wherein the chip system comprises a processor, the processor is configured to be coupled to a memory, the memory is configured to store a program or instructions, and when the program or the instructions are executed by the processor, the method according to any one of claims 1 to 14 is implemented.

30. A computer-readable storage medium, wherein the computer-readable storage medium stores a computer program or instructions; and when the computer program or the instructions are executed by a processor, the method according to any one of claims 1 to 14 is implemented.

31. A computer program product, wherein the computer program product comprises a computer program or instructions, and when the computer program or the instructions are executed by a processor, the method according to any one of claims 1 to 14 is implemented.

FIG. 1

EP 4 593 338 A1

NAS signaling security:
Encryption, integrity
protection, and
anti-repetition

RRC signaling security:
Encryption, integrity
protection, and
anti-repetition
(completed at a PDCP
layer)

No security protection is
provided for underlying
signaling

| Terminal device | Network device | AMF |
|---|---|---|
| NAS | ⟷ | NAS |
| RRC | ⟷ RRC | |
| PDCP | ⟷ PDCP | |
| RLC | ⟷ RLC | |
| MAC | ⟷ MAC | |
| PHY | ⟷ PHY | |

FIG. 2

| Terminal device | Network device | Core network |
|---|---|---|
| Cell selection | | |
| Random access | | |
| RRC connection establishment | | |
| Key derivation and agreement at a NAS stratum (NAS security) | | |
| Key derivation and agreement at an AS stratum (AS security) | | |

FIG. 3

| Base station | Attacker | UE |
|---|---|---|

Send an MIB (PCI)

S401: Obtain a control resource set 0 and search space 0

SIB 1

S402: Obtain random access search space, and calculate a RA-RNTI

Msg1

Msg2 (RA-RNTI obtained in S402)

S403: Obtain a TC-RNTI

Msg3 (RRC configuration request and PUSCH)

Msg4 (TC-RNTI obtained in S403)

S404: Obtain parameters such as a pdcch-DMRS-scrambling ID and a user-level control resource set/search space

Configure a security mode parameter

S405: RRC reconfiguration message (user-level control resource set and search space parameters)

Key DCI

S406: Obtain the user-level control resource set/search space/RNTI

S407: Spoof the key DCI

FIG. 4

| Terminal device | | Network device |
|---|---|---|
| S501: Generate, by using a random number generator, at least one random number based on a user-specific parameter of a PDCCH and a specified historical message exchanged with the network device | | Generate, by using a random number generator, at least one random number based on a user-specific parameter of a PDCCH and a specified historical message exchanged with the terminal device |
| S502: Generate a PDCCH encryption key based on a first random number by using a key generator | | Generate a PDCCH encryption key based on a first random number by using a key generator |
| S503: Decrypt the PDCCH based on the PDCCH encryption key | ←—— PDCCH —— | Encrypt a PDCCH based on the PDCCH encryption key |

FIG. 5

Periodically perform
random scrambling on a
scrambling ID queue that is
not allocated

Terminal device A
An RRC reconfiguration
scrambling ID is extracted
from a head of a queue

| 745 |
|---|
| 5623 |
| 13 |
| 20840 |
| ... |
| ... |
| 8920 |
| 456 |
| 15698 |
| 56 |

Terminal device B
An RRC release
scrambling ID is placed at
a tail of the queue

FIG. 6

| ← Cell level → | | | ← Beam level → | | | ← Beam level → | | | |
|---|---|---|---|---|---|---|---|---|---|
| RSRP | RSRQ | SINR | RSRP | RSRQ | SINR | RSRP | RSRQ | SINR | ... |

← Measurement report →

FIG. 7

Salt value: P →

Key material: Q →

| Key derivation algorithm | → Encryption key

**FIG. 8**

A length of a pdcch-DMRS-scrambling ID is 32 bits

First selection rule
First 16 bits

Second selection rule
Last 16 bits

Generation of a PDCCH scrambling sequence

Generation of a PDCCH DMRS sequence

**FIG. 9**

A length of a pdcch-DMRS-scrambling ID is 32 bits

First selection rule
Last 16 bits

Second selection rule
First 16 bits

Generation of a PDCCH scrambling sequence

Generation of a PDCCH DMRS sequence

**FIG. 10**

A length of a pdcch-DMRS-scrambling ID is 32 bits

First selection rule Obtain an even-numbered index block based on M bits

Second selection rule Obtain an even-numbered index block based on M bits

Generation of a PDCCH scrambling sequence

Generation of a PDCCH DMRS sequence

FIG. 11

FIG. 12

```
┌─────────────────────────┐          ┌─────────────────────────┐
│  User-specific parameter │          │                         │
│  of a PDCCH, for example,│          │ Specified historical    │
│  a pdcch-DMRS-scrambling │          │ message                 │
│  ID                      │          │                         │
└──────────┬──────────────┘          └──────────┬──────────────┘
           │                                     │
           └──────────────┐       ┌──────────────┘
                          ▼       │
                 ┌─────────────────┐          ┌─────────────────┐
                 │ Random number   │─────────▶│  Key generator  │
                 │ generator       │          │                 │
                 └────────┬────────┘          └────────┬────────┘
              ┌───────────┴──────────┐                 │
              ▼                      ▼                 ▼
    ┌─────────────────┐    ┌─────────────────┐  ┌─────────────────┐
    │ Update a PDCCH  │    │ Update a PDCCH  │  │   PDCCH         │
    │ scrambling      │    │ pilot sequence  │  │ encryption key  │
    │ sequence        │    │                 │  │                 │
    └─────────────────┘    └─────────────────┘  └─────────────────┘
```

FIG. 13

FIG. 14

Constellation phase rotation

FIG. 15

Data and pilot subcarrier hybrid interleaving encryption

FIG. 16

FIG. 17

FIG. 18

Communication apparatus 1900

Processing unit 1910

Interface unit 1920

FIG. 19

Communication apparatus 2000

Processor 2010

Interface circuit 2020

Memory 2030

FIG. 20

# INTERNATIONAL SEARCH REPORT

| International application No. |
| --- |
| **PCT/CN2022/128562** |

| A. | CLASSIFICATION OF SUBJECT MATTER |
| --- | --- |

H04L27/00(2006.01)i

According to International Patent Classification (IPC) or to both national classification and IPC

| B. | FIELDS SEARCHED |
| --- | --- |

Minimum documentation searched (classification system followed by classification symbols)

IPC: H01L H04W

Documentation searched other than minimum documentation to the extent that such documents are included in the fields searched

Electronic data base consulted during the international search (name of data base and, where practicable, search terms used)

CNTXT, EPTXT, USTXT, VEN, 3GPP; VEN; IEEE, WOTXT: 网络设备, 终端, 参数, 历史记录, 历史消息, 历史信息, 随机数, 物理信道, 加密, 解密; inetwork, device, user, parameter, decorde, PDCCH, PDSCH, PUCCH, PUSCH, random, number, history, record, , information, message, decrypt+, encrypt+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114630394 A (CHINA MOBILE COMMUNICATIONS CORPORATION RESEARCH INSTITUTE; CHINA MOBILE COMMUNICATIONS GROUP CO., LTD.) 14 June 2022 (2022-06-14)<br>description, paragraphs 104-278, and figures 1-9 | 1-31 |
| A | CN 111885739 A (HUAWEI TECHNOLOGIES CO., LTD.) 03 November 2020 (2020-11-03)<br>entire document | 1-31 |
| A | CN 112673703 A (LG ELECTRONICS INC.) 16 April 2021 (2021-04-16)<br>entire document | 1-31 |
| A | CN 115004617 A (BEIJING XIAOMI MOBILE SOFTWARE CO., LTD.) 02 September 2022 (2022-09-02)<br>entire document | 1-31 |
| A | US 2022086908 A1 (LG ELECTRONICS INC.) 17 March 2022 (2022-03-17)<br>entire document | 1-31 |
| A | US 2022104178 A1 (LG ELECTRONICS INC.) 31 March 2022 (2022-03-31)<br>entire document | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 June 2023** | **26 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/128562**

| Patent document cited in search report | | | Publication date (day/month/year) | Patent family member(s) | | | Publication date (day/month/year) |
|---|---|---|---|---|---|---|---|
| CN | 114630394 | A | 14 June 2022 | None | | | |
| CN | 111885739 | A | 03 November 2020 | None | | | |
| CN | 112673703 | A | 16 April 2021 | US | 2022377683 | A1 | 24 November 2022 |
| | | | | DE | 112019003522 | T5 | 20 May 2021 |
| | | | | DE | 112019003522 | T8 | 12 August 2021 |
| | | | | WO | 2020032724 | A1 | 13 February 2020 |
| CN | 115004617 | A | 02 September 2022 | None | | | |
| US | 2022086908 | A1 | 17 March 2022 | WO | 2020145784 | A1 | 16 July 2020 |
| US | 2022104178 | A1 | 31 March 2022 | WO | 2020145785 | A1 | 16 July 2020 |

Form PCT/ISA/210 (patent family annex) (July 2022)